# EUROPEAN PATENT APPLICATION

(11) **EP 0 793 214 A1**
(43) Date of publication of application: **03.09.1997**
(21) Application number: 97103243.8
(22) Date of filing: 27.02.1997
(51) Int. Cl.: G09G 3/34, H04N 5/44

(54) **Display system with spatial light modulator with decompression of input image signal**

(30) Priority: 29.02.1996 US 12709
(71) Applicant: TEXAS INSTRUMENTS INCORPORATED, Dallas Texas 75265 (US)
(72) Inventor: Gove, Robert J., Los Gatos, CA 95030 (US); Kunzman, Adam J., McKinney, TX 75069 (US)
(74) Representative: Schwepfinger, Karl-Heinz, Dipl.-Ing.

(57) **Abstract**

An all-digital television system (10), especially designed for receiving and interpreting advanced television (ATV) signals. The system (10) uses a multiprocessor unit (12) for performing decompression and a serial video processor (13) for scaling. A picture quality unit (14) performs colorspace conversion and de-gamma. A bit-plane buffer formats and stores bit-plane data. The display devices are three spatial light modulators (SLMs) (16), each of which generate a red, green, or blue image. The images are combined by an optics unit (17) for full-color full-motion displays.

## Description

### TECHNICAL FIELD OF THE INVENTION

This invention relates to image display systems, and more particularly to a digital image display system for displaying images from advanced television signals, namely standard definition television (SDTV) or high definition television (HDTV) signals.

### BACKGROUND OF THE INVENTION

Video display systems based on spatial light modulators (SLMs) are increasingly being used as an alternative to display systems using cathode ray tubes (CRTs). SLM systems provide high resolution displays without the bulk and power consumption of CRT systems. They are all-digital, with both digital processing and display. In other words, a digital input signal can be received, or an analog signal can be received and digitized, with subsequent processing and display of the data in digital form.

Digital micro-mirror devices (DMDs) are a type of SLM, and may be used for projection display applications. A DMD has an array of micro-mechanical display elements, each having a tiny mirror that is individually addressable with an electronic signal. Depending on the state of its addressing signal, each mirror tilts so that it either does or does not reflect light to the image plane. The mirrors are often referred to as "pixels", to correspond to the pixels of the image they generate, but they are more correctly referred to as "display elements". Generally, displaying pixel data is accomplished by loading memory cells connected to the display elements. Each memory cell receives one bit of data representing an 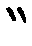 ON*"* or 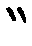 OFF*"* state of a display element. The display elements can maintain their 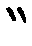 ON*"* or 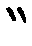 OFF*"* state for controlled display times.

Other SLMs operate on similar principles, with an array of display elements that may emit or reflect light simultaneously, such that a complete image is generated by addressing display elements rather than by scanning a screen. Another example of an SLM is a liquid crystal display (LCD) having individually driven display elements.

For all types of SLMs, motion displays are achieved by updating the data in the SLM*'*s memory cells at sufficiently fast rates. To achieve intermediate levels of illumination, between white (ON) and black (OFF), pulse-width modulation (PWM) techniques are used. The basic PWM scheme involves first determining the rate at which images are to be presented to the viewer. This establishes a frame rate and a corresponding frame period. For example, in a standard television system, images are transmitted at 30 frames per second, and each frame lasts for approximately 33.3 milliseconds. Then, the intensity resolution for each pixel is established. In a simple example, and assuming n bits of resolution, the frame time is divided into 2ⁿ-1 equal time slices. For a 33.3 millisecond frame period and n-bit intensity values, the time slice is 33.3/(2ⁿ-1) milliseconds.

Having established these times, for each pixel of each frame, pixel intensities are quantized, such that black is 0 time slices, the intensity level represented by the LSB is 1 time slice, and maximum brightness is 2ⁿ-1 time slices. Each pixel's quantized intensity determines its on-time during a frame period. Thus, during a frame period, each pixel with a quantized value of more than 0 is 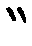 ON*"* for the number of time slices that correspond to its intensity. The viewer's eye integrates the pixel brightness so that the image appears the same as if it were generated with analog levels of light.

For addressing SLMs, PWM calls for the data to be formatted into "bit-planes", each bit-plane corresponding to a bit weight of the intensity value. Thus, if each pixel's intensity is represented by an n-bit value, each frame of data has n bit-planes. Each bit-plane has a 0 or 1 value for each display element. In the PWM example described in the preceding paragraphs, during a frame, each bit-plane is separately loaded and the display elements are addressed according to their associated bit-plane values. For example, the bit-plane representing the LSBs of each pixel is displayed for 1 time slice, whereas the bit-plane representing the MSBs is displayed for 2n/2 time slices.

DMD-based digital display systems are described in further detail in U.S. Patent No. 5,079,544, entitled "Standard Independent Digitized Video System", U.S. Patent No. 5,526,051, entitled "Digital Television System", and in U.S. Patent No. 5,452,024, entitled "DMD Display System", each assigned to Texas Instruments Incorporated.

Recently, standards have been developed for advanced television (ATV), whose transmission signals are comprised of compressed digital data, which is decompressed at the television receiver. ATV includes both standard definition television (SDTV) and high definition television (HDTV). SDTV is the digital equivalent of today's analog television signals, and is characterized by interlaced format and a 4:3 aspect ratio. As compared to SDTV, HDTV is characterized by higher frame resolution, progressive format, and a 16:9 aspect ratio. The characteristics of both SDTV and HDTV are compatible with the DMD technology, and an appropriately configured DMD-based system is capable of meeting HDTV bandwidth requirements.

### SUMMARY OF THE INVENTION

One aspect of the invention is a display system and method for displaying images based on an input signal carrying compressed video data. Such signals include both STV and HDTV signals. A signal interface receives the input signal and converts it to a bitstream of pixel data. A multiprocessor unit receives this pixel data and performs various processing tasks, which vary depending on the display mode. The multiprocessor unit is a single device having a master processor and multiple digital signal processors capable of operating in parallel. A primary processing function of the multiprocessor unit is decompression of pixel data. A scaling processor receives the decompressed pixel data and scales it vertically, horizontally, or in both directions, to a desired display resolution. Then, picture quality unit receives the processed pixel data and converts its colorspace if it is not already RGB data, as well as reverses any de-gamma correction, thereby providing display-ready pixel data. A bit-plane buffer has formatting circuitry for formatting the display-ready pixel data into bit-plane format and has memory cells for storing the data. It delivers the data in bit-plane format to three spatial light modulators (SLMs) that concurrently generate differently colored images, which are combined for display of full color images. Other embodiments use either a single SLM that generates the differently colored images sequentially through a color wheel, or multiple SLMs that generate a combination of concurrent and sequential images.

An advantage of the invention is that it provides sharp, clear, exact-color, stable, and noise-free video. The system is entirely based on digital semiconductor technology. As more advanced digital inputs emerge, such as with MPEG-based digital video, the system excels with its ability to meet bandwidth requirements. Complex processing tasks can be allocated within the multiprocessor unit as needed for bandwidth requirements. Also, data can be divided into channels for parallel processing through the picture quality unit and into the bit-plane buffer.

### BRIEF DESCRIPTION OF THE DRAWINGS

The present invention will now be further described, by way of example, with reference to the accompanying drawings in which:
FIGURE 1 is a block diagram of a digital image display system in accordance with the invention;
FIGURE 2 illustrates the multiprocessor unit of FIGURE 1;
FIGURE 3 illustrates an example of partition of tasks for compression decoding by the multiprocessor unit of FIGURE 2;
FIGURE 4 illustrates the serial video processor of FIGURE 1; and
FIGURE 5 illustrates the picture quality unit and bit-plane buffer of FIGURE 1.

### DETAILED DESCRIPTION OF THE INVENTION

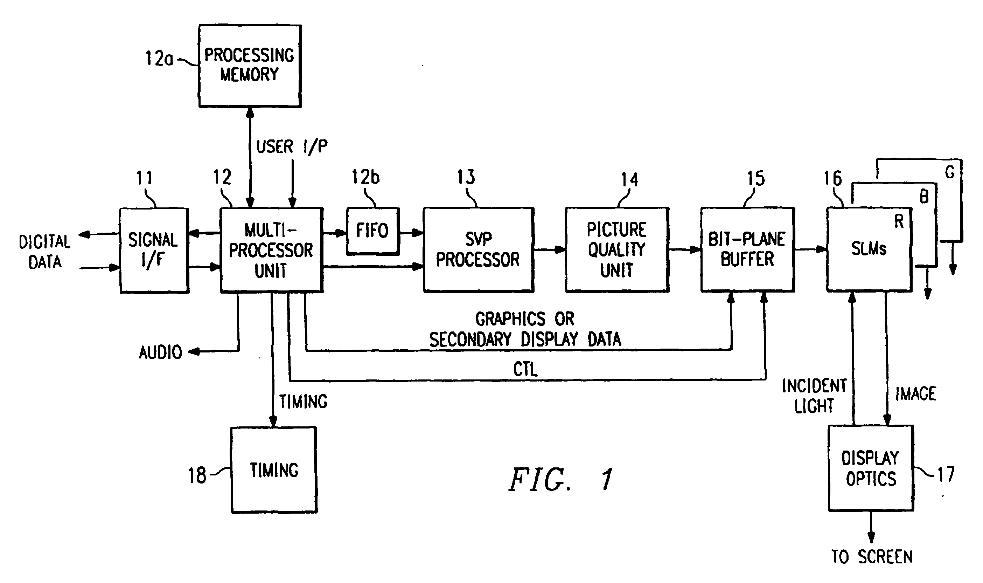

FIGURE 1 illustrates an all-digital image display system 10 in accordance with the invention. Display system 10 comprises a signal interface 11, a multiprocessor unit 12, a serial video processor 13, a picture quality unit 14, a bit frame buffer 15, a spatial light modulator (SLM) 16, an optics unit 17, and a timing unit 18. The following description is primarily directed to multiprocessor unit 12, to serial video processor 13, and to a configuration of system 10 to meet bandwidth requirements for high resolution displays in various display modes. Multiprocessor unit 12 performs MIMD (multiple instruction multiple data) processing, whereas serial video processor 13 performs SIMD (single instruction multiple data) processing, with pixel processing tasks being allocated between them.

Signal interface 11 receives digital input signals, such as the modulated digital bitstreams provided by proposed high definition advanced television standards. Signal interface 31 demodulates and buffers the input signal, so as to provide compressed pixel data. MPU 12 also interprets the input signal so as to provide audio and timing signals. Signal interface 11 has appropriate filters and memory for performing these tasks. The image data into signal interface 11 might come from a number of sources, including a television tuner for video data or a CD-ROM drive, a disk, or network for graphics data.

System 10 may be configured for any one of the advanced television (ATV) signals, including standard television (STV) or high definition television (HDTV) signals. Furthermore, system 10 could be configured for selection between two or more input signals having different formats. If system 10 is to receive input signals having different formats, signal interface 11 provides a control signal to MPU 12 and to SVP 13 to indicate the format of the input signal so that appropriate programming is executed by these processors. Means for providing such a control signal are described in Published European Patent document No. 0,710,016, assigned to Texas Instruments Incorporated.

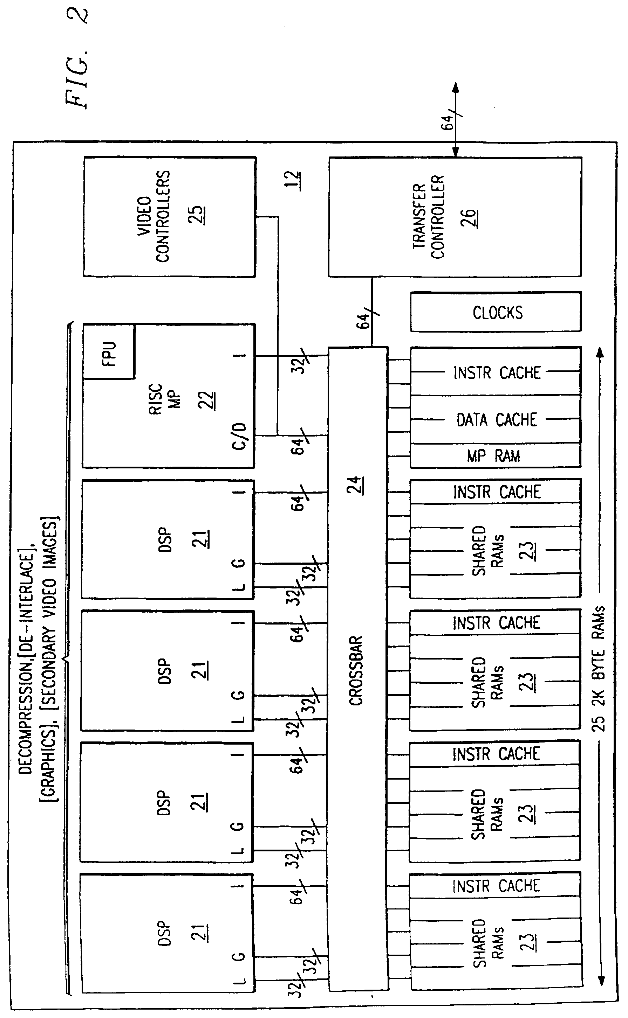

Multiprocessor unit (MPU) 12 receives data from signal interface 11. This data is a bitstream of data packets, which may contain video, audio, or graphics information. As explained below in connection with FIGURE 2, MPU 12 decompresses the data. It may perform other tasks as appropriate to the input signal, such as progressive scan conversion if the input signal is in interlaced format. MPU 12 may also provide an "upstream" signal for interactive television applications. An example of a suitable MPU 12 is the MVP (Multimedia Video Processor), TMS320C80, manufactured by Texas Instruments Incorporated.

A processing memory 12a stores pixel data as needed for processing by MPU 12. A first-in first-out (FIFO) memory 12b buffers data from MPU 12 to serial video processor (SVP) 13 to accommodate the SVP input structure.

Serial video processor (SVP) 13 receives the pixel data from MPU 12 and completes the processing necessary to prepare the pixel data for display. As explained below in connection with FIGURE 3, the processes performed by SVP 13 includes horizontal and vertical scaling. Scaling is the process of changing image resolution, with horizontal scaling changing the number of active pixels per line and vertical scaling changing the number of active lines per frame. Examples of devices suitable for SVP 13 are the SVP TMC57102 and TMC57110, both manufactured by Texas Instruments Incorporated.

Picture quality unit (PQU) 14 receives the decompressed and scaled pixel data from SVP 13 and performs tasks such as colorspace conversion and de-gamma. Color space conversion converts color difference (YUV) data to RGB data. The data also undergoes a degamma process, which linearizes the RGB data by removing the effect of a gamma correction that is processed into video signals at transmission. PQU 14 may also perform error diffusion when the pixel bit-depth for display is to be less than the pixel bit-depth of the transmitted signal.

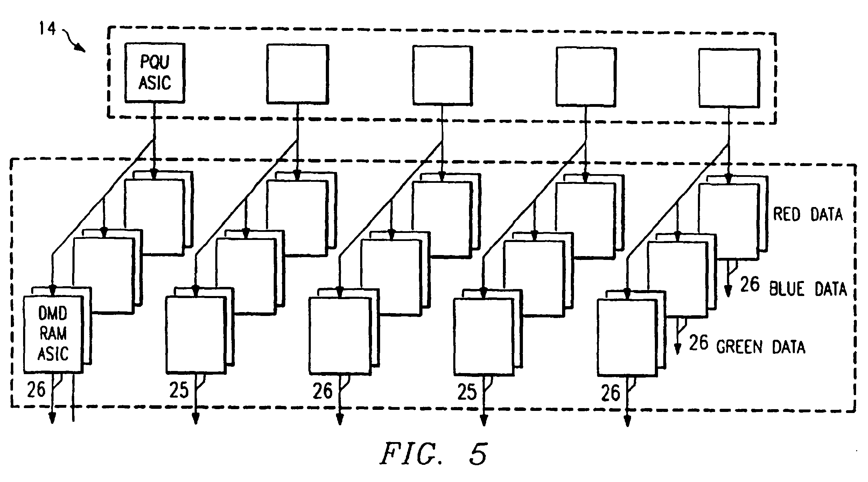

Bit-plane buffer 15 receives processed pixel data from PQU 14. It formats the data into "bit-plane" format, and delivers the bit-planes to SLMs 16 one at a time. As discussed in the Background, the bit-plane format permits each display element of SLM 16 to be turned 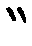 ON*"* or 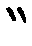 OFF*"* in response to the value of 1 bit of data at a time. As explained below in connection with FIGURE 5, this formatting is performed by hardware associated with bit-plane buffer 15.

In a typical display system 10, bit-plane buffer 15 has a "double buffer" memory, which means that it has a capacity for at least two display frames. The buffer for one display frame can be read out to SLMs 16 while the buffer for another display frame is being written. The two buffers are controlled in a "ping-pong" manner so that data is continuously available to SLMs 16.

The bit-plane data from bit-plane buffer 15 is delivered to SLMs 16. Details of a suitable SLM 16 are set out in U.S. Patent No. 4,956,619, entitled "Spatial Light Modulator", which is assigned to Texas Instruments Incorporated. Essentially, SLMs 16 use the data from bit-plane buffer 15 to address each display element of its display element array. The "ON" or "OFF" state of each display element forms an image. During a frame period, each SLM 16 generates an image for a different color (red, green, and blue) of a picture. The images for each frame are concurrently displayed and combined to form a color picture.

Preferably, SLMs 16 have a display element array size that is at least as large as the resolution of the signal to be displayed. For example, for HDTV, full transmission resolution is 1920 x 1080 pixels. To match this resolution, SLMs would have an array size at least this large. However, an input signal having a different horizontal or vertical resolution can be upscaled or downscaled to fit the SLM size in either or both dimensions. Display optics unit 17 has optical components for illuminating SLMs 16 and for receiving the image from SLMs 16. These components include a light source, lenses, and a zoom projection lens.

The three SLMs 16 of FIGURE 1 provide color images by concurrently displaying images of three primary colors. In other embodiments, there could be only a single SLM and differently colored images would be displayed sequentially through a color wheel. The eye would then integrate the sequential images to form a colored picture. Still other embodiments use two SLMs with images of different colors being either sequential or combined.

Master timing unit 18 provides various system control functions. Timing unit 18 may be implemented with a field programmable gate array (FPGA), to handle different frame resolutions and frame rates.

### MULTIPROCESSOR UNIT

FIGURE 2 is block diagram of MPU 12. As stated above, a suitable MPU 12 is the TMS320C80 MVP, manufactured by Texas Instruments Incorporated. Other multiprocessor units having similar characteristics could be substituted. In addition to the structural characteristics described below, an important functional characteristic of MPU 12 is the ability to perform decompression of input data at rates required for full motion video. To this end, the MVP is capable of performing 2 billion RISC-like operations per second (BOPs). The internal data memory transfer bandwidth is 2.4 Gbytes per second and the external data transfer bandwidth is 400 Mbytes per second.

MPU 12 has a set of parallel signal processors 21, a master processor 22, and RAM (random access memory) 23. All processors 21 and 22 are programmable. The processors 21 and 22 access RAM 23 via a crossbar switch 24. The crossbar switch 24 interconnects the processors 21 and 22 in a manner such that different combinations of memory arrangements can be achieved as necessary for the particular operation.

The master processor 22 is a 32-bit RISC (reduced instruction set computer) processor with a floating point hardware unit (FPU). It has an instruction (I) port to access an instruction cache in RAM 23. It coordinates the processing by the signal processors 21 and communicates with other components of system 10.

The parallel signal processors 21 are 32-bit integer units. Each signal processor 21 has a global (G) and a local (L) port to access RAM 23, and an instruction (I) port to access an instruction cache in RAM 23. Each signal processor 21 has two address generators, a three-input ALU, and a clock multiplier, all controlled with 64-bit instructions.

The crossbar switch 24 localizes the high bandwidths necessary for decompression algorithms. It thereby avoids high external bandwidth requirements.

A video controller 25 has dual frame timers, for different input and output frame rates. Transfer controller 26 is a direct memory access device, used for cache servicing and transferring blocks of data on or off multiprocessor unit 12.

RAM 23 is 50K bytes of single-cycle memory, divided into 25 2K-byte RAM units. Each processor 21 and 22 has one RAM unit partially dedicated to storing interrupt vectors addresses and specifying parameters to the transfer controller 26. Each signal processor 21 is three data RAM units that any processor 21 or 22 can access as shared memory. Each signal processor 21 has one instruction cache RAM unit and the master processor 22 has two instruction cache RAM units. These RAMs are managed by an instruction cache controller in each processor. The master processor 22 also has two RAM units that for data, managed by a data cache controller.

Further details describing the MVP are set out in U.S. Patent No. 5,212,777, entitled "Multi-Processor Reconfigurable in Single Instruction Multiple Data (SIMD) and Multiple Instruction Multiple Data (MIMD) Modes and Method of Operation", assigned to Texas Instruments Incorporated. Additional information is available in various MVP User*'*s Guides, available from Texas Instruments.

A primary task of MPU 12 is decompression of the pixel data. It may be programmed to support various compression standards, such as the JPEG, MPEG, MPEG2, Px64, CCITT, etc. This programming can be for either still and full motion decompression algorithms. A multi-format MPU 12, as described in Published European Patent document No. 0,710,016 can be switchable between decompression algorithms, so as to perform whatever decompression method is appropriate for the input signal. As stated above, if signal interface 11 is capable of detecting the signal type, it delivers a control signal to MPU 12. MPU 12 operates on multidimensional blocks of data, such as the 8x8 and 16x16 blocks of data called for by the MPEG standard.

Decompression of MPEG encoded data using an MVP is described in U.S. Patent No. 5,420,809, entitled "Huffman Decoding Method, Circuit, and System Employing Conditional Subtraction for Conversion of Negative Numbers", assigned to Texas Instruments Incorporated.

FIGURE 3 illustrates an example of task allocation for a decompression process performed by MPU 12. Master processor 22 acts as a "server" to allocate tasks to the four DSPs 21. Tasks are queued to each DSP 21. A first DSP 21 performs variable length decoding for variable length coded (VLC) data. Its output is queued to the other three DSPs 21, which perform, in parallel, inverse discrete transform (IDCT) and pixel reconstruction. Thus, as exemplified by FIGURE 3, a less time consuming task can be performed by one DSP with more complicated tasks being partitioned among other DSPs. This permits all necessary processing to be performed within required bandwidth requirements for high resolution full motion video display.

If the input data is interlaced, MPU 12 performs progressive scan conversion. In this process, MPU 12 generates new data to fill in odd lines of even fields and even lines of odd fields. The particular progressive scan conversion algorithm to be performed may depend on whether the picture is in motion or still. The motion signal embedded in the compressed data signal could be used to control which algorithm is performed.

MPU 12 can also be programmed to generate graphics displays when the input signal carries graphics data. If the graphics display requires intensive processing, MPU 12 and bit-plane buffer 15 could be configured so that MPU 12 generates a portion of a frame every frame period. For example, during a first frame period, MPU might generate the top portion of an image. During the next frame period, MPU 12 would generate the bottom portion. The portions are updated in alternating frames. An appropriate control signal to buffer 15 ensures that data is delivered to the proper memory space. For graphics displays that are already in RGB format, MPU 12 can deliver the graphics data directly to bit-plane buffer 15.

MPU 12 may also perform decoding and processing for "secondary" video displays, such as picture-in-picture or multiple picture displays. For multiple picture displays, MPU 12 could receive multiple channels from interface 11 and perform the necessary scaling. For secondary displays, MPU 12 would deliver the image data to PQU 14 for colorspace conversion and de-gamma if necessary.

Because MPU 12 is programmable, it can store and execute algorithms for any of these various display "modes". The images generated for the different modes can be generally categorized into "main" video images, "secondary" video images, and graphics images. Each mode can have its own set of algorithms, which are called and executed in accordance with a control signal.

MPU 12 can be programmed to receive commands from a user, via an input device such as a remote control keypad. It can be programmed to prepare this user input data for upstream transmission for interactive television applications.

To meet bandwidth requirements for a main video display, all signal processors 21 may usually be performing decompression. However, when other modes are called for, such as a secondary video display, one signal processor 21 could be switched to that task, perhaps at the expense of resolution or update rate of the main image.

In the embodiment of FIGURE 1, colorspace conversion is performed by PQU 14. However, it would also be possible to program MPU 12 to perform colorspace conversion. Subsequent processing would then operate on RGB data. Because RGB data has a higher bandwidth than does YUV data, appropriate modifications may be necessary to fit the data to the input structure of SVP 13, such as by downscaling the horizontal resolution.

### SERIAL VIDEO PROCESSOR (SVP)

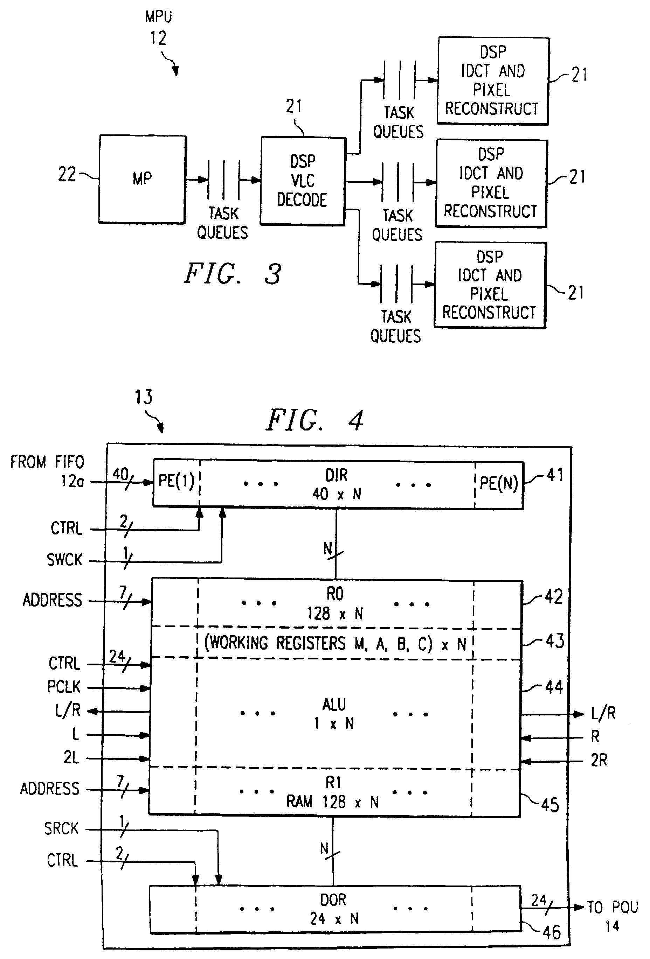

FIGURE 4 is a block diagram of SVP 13. As stated above, examples of suitable SVP processors are the SVP TMC57102 or the TMC57110, programmable processors manufactured by Texas Instruments Incorporated. However, system 10 is not necessarily limited to use with this particular SVP, and variations of the SVP may be used. A particular characteristic of SVP 13 is that it operates on rows of pixel data on a row-by-row basis. In alternative embodiments, SVP 13 could be replaced with a special scaling processor, such as the ACUITY device commercially available from Genesis Microchip Incorporated.

The "serial video" aspects of SVP 13 derive from the fact that it is particularly suited for video processing, where discrete packets of incoming data, which have a uniform size, are input and output in a word-serial manner but are processed in parallel. It receives and processes data vectors in synchronization with a real time data source. Essentially, SVP 13 operates by using fine-grained parallelism techniques in which many processing elements operate on the data concurrently.

SVP 13 is a general purpose, mask-programmable, single-instruction multiple-data (SIMD), reduced instruction set computing (RISC) device. Consistent with the SIMD characteristic, SVP 13 has a number of processing elements (PE*'*s), which execute the same instruction at the same time. External micro-instructions control primitive logic and arithmetic functions for each clock cycle.

SVP 13 is a one-dimensional array of one-bit PE*'*s. A vertical slice through SVP 13 of FIGURE 4 yields an individual PE, thus each PE (I) and its components are referred to herein as a "column" with respect to the entire array of SVP 13. Each PE has the following basic components: a data input register (DIR) 41, two independently addressed register files (R0 and R1) 42 and 45, a set of working registers (WR*'*s) 43, a one-bit arithmetic unit (ALU) 44, and a data output register (DOR) 46.

DIR 41 can be thought of as the "input layer." R0 42 and R1 45, the WR*'*s 43, and the ALU 44 are the "computational layer." DOR 46 is the output layer." Although each layer may be independently clocked across each layer, all PE*'*s operate in unison, every clock cycle. The input to DIR 41 is word-serial in the sense that words of an incoming packet of data are received into DIR 41 word by word. Similarly, the output from DIR 46 is word-serial.

Although input and output are word-serial, processing of each data packet is parallel. Also, because of the "layered" approach to processing, data input, computation, and data output may be concurrent operations, with each being independently clocked. Each PE performs these operations on an entire vector of data at once, and is thus a "pipeline" that enables several operations to be in various stages at once. When a vector instruction is executed, the elements of the vector are fed into the appropriate pipeline one at a time, delayed by the time it takes to complete one stage of the pipeline. Input and output are in synchronization with the data source, such as a video camera, and with the data sink, such as a raster scan display.

For purposes of illustration, SVP 13 has N number of PE*'*s, where N - 1440. The memory size is 256 bits for each PE, with 128 bits each for R0 and R1. DIR 41 is 40 bits wide, and DOR 46 is 24 bits wide. These sizes are discretionary, however, and may be changed without changing the substance of the invention. The input and output bit sizes are included in FIGURE 4 to illustrate various input/output and device size relationships. However, these bit sizes may be varied according to the application.

Using these values, a single SVP 13 can process data packets of 1 to 1440 words by 40 bits. Typically, the packets are equal in size and represent periodically recurring data, such as lines of a television image, where each packet is digitized into N number of data samples, and where each sample, S(I), I = 1 . . . N, is a data word used to generate an output word. In television applications, where SVP 13 has N PE*'*s, N also represents the number of data samples per line.

DIR 41 and DOR 46 are the basic I/O devices of SVP 13. Both DIR 41 and DOR 46 are arrays of sequentially addressed, dual-ported memory cells. As used in this description, "DIR 41" refers to the entire array, and "DIR 41(I)" refers to the column of DIR 41 that receives data sample S(I).

The input array size to SVP 13 permitted by DIR 41 is 1440 words x 40 bits. One port of DIR 41 is organized as 1440 words of 40 bits each and permits DIR 41 to be written into from a 40 bit input line in parallel. Thus, this first port of DIR 41 emulates the write port of a 1440-word line memory, which permits word-serial input. The second port of DIR 41 is organized as 40 words of 1440 bits each, where each bit corresponds to a PE(I). This second port provides an interface between DIR 41 and PE*'*s. It is physically a part of, and is mapped into, the absolute address space of R0 42. This permits the contents of DIR 41 to be addressed for selection to write into memory and is read in parallel.

Like DIR 41, DOR 46 is a two port device. In a manner similar to DIR 41, it provides 1-bit access to each ALU 44(I) and 24-bit output from SVP 13. One port of DOR 46 is organized as 1440 words of 24 bits each. This port functionally emulates the read port of a 1440-word line memory and is used for word-serial output. The second port of DOR 46 is organized as 24 words of 1440 bits each, where each bit corresponds to a PE(I). This second port couples to R1 45, and is written to in parallel.

DIR 41 and DOR 46 each have a 1440-bit word selection commutator, which controls loading to and reading from DIR 41 and DOR 46, respectively. Also, DIR 41 and DOR 46 each have an enable and reset signal.

R0 42 and R1 45 each have 128 words by 1 bit of read/write memory per PE. Different addressing structures cover the R0 42 and R1 45. However, R0 42 and R1 45 share the same control and timing circuitry. R0 42 and R1 45 are comprised of random access memory (RAM) cells. If dynamic RAM cells are used, they must be refreshed, but typical digital television applications perform the refresh by operating in a faster cycle time than the required refresh period.

Each R0 42(I) and R1 45 (I) is independently addressable, and is capable of 10 bit read-modify-write cycle such that it can be read, the data operated on by ALU 44, and the result written back to it in a single clock cycle. R0 42 and R1 45 read data at the same time, but write separately.

The working register (WR) set 43(I) for each PE(I) comprises four registers: M, A, B, and C. These registers are the same, except for their data sources and destinations. Each WR 43(I) is associated with an input multiplexer for providing data to the four inputs of each ALU 44(I). The M register is used for division, multiplication, and logical and conditional operations. Registers A, B, and C are addend, minuend, and carry/borrow registers, respectively.

ALU 44 is a simple full adder/subtracter and a one-bit multiplier. The inputs to ALU 44 are from the WR*'*s 43. These ALUs carry out whatever instruction is specified by the control unit of SVP 13. A feature of SVP 13 is that each ALU 44 executes instructions from a set of instructions that operate on data directly. A separate control unit (not shown) which feeds an instruction stream to SVP 13 has an additional set of instructions that provide basic execution control.

In the example of this description, it is assumed that SVP 13 has sufficient PE*'*s to process one line of pixels, where each PE corresponds to one pixel of a line of video data. If not, the data can be decimated to fit the SVP 13. An interpolation processor (not shown) can be added to regenerate the number of pixels required for display.

SVP 13 performs scaling tasks. If the incoming data has a smaller vertical or horizontal resolution than SLMs 16 it may be upscaled to maximize the number of active SLM display elements to obtain bright high-resolution display. Also, the data can be downscaled, vertically or horizontally, to match the signal and display resolutions.

Examples of methods of performing scaling with an SVP are described in U.S. Patent No. 5,526,051 and in European Patent Publication No. 0,710,016. The methods described therein include bi-linear and cubic scaling for 2:3, 3:4, and 9:10 scale factors.

### PICTURE QUALITY UNIT AND BIT-PLANE BUFFER

FIGURE 5 illustrates one embodiment of PQU 14 and bit-plane buffer 15. As explained below, the pixel data is divided into channels, where each channel contains a portion of a row of pixel data. This facilitates meeting bandwidth requirements for high resolution displays.

As stated above, PQU 14 performs color space conversion, de-gamma, and error diffusion. YUV data is delivered to a 3x3 matrix multiplier, where color space conversion is performed. Data that is received as RGB data bypasses the colorspace conversion. If the data has been gamma corrected, PQU 14 performs a de-gamma process by means of a look-up table. Appropriate colorspace conversion and de-gamma processes are described in U.S. Patent No. 5,526,051. Gamma correction is necessary because a gamma curve is introduced into the standard video signal to compensate for a nonlinearity in a CRT. However, system 10 has SLMs 16, which have a linear response. The quality of the display is improved by removing the effect of the unneeded gamma curve. PQU 14 may be implemented as an application specific integrated circuit (ASIC). For larger SLM resolutions, multiple ASICs are used, such that two or more channels of data are processed in parallel. European Patent Application No 96120656.2, assigned to Texas Instruments Incorporated, describes an example of an ASIC for implementing PQU 14.

In the example of FIGURE 5, PQU 14 have five ASICs, each for processing one of five channels of data. Each ASIC contains a matrix multiplier for color space conversion, a de-gamma LUT, and FIFO's for delivering data to bit-plane buffer 15.

Bit-plane buffer 15 is comprised of DMDRAMs, which are also an application specific device (ASIC). Examples of suitable DMDRAMs are described in U.S. Pat. Serial No. 08/160,344, entitled "Digital Memory for Display System Using Spatial Light Modulator", and in U.S. Pat. Serial No. 08/333,199, entitled "Memory Architecture for Reformatting and Storing Display Data in Standard TV and HDTV Systems", both assigned to Texas Instruments Incorporated. The DMDRAMs described therein have a format on output feature and a format on input feature, respectively.

To meet bandwidth requirements for pixel data ranging from 9 to 12 bits per pixel and an SLM display size of 2048 x 1152 pixels, bit-plane buffer 15 has 30 DMDRAMs, 10 for each SLM 16. Each SLM 16 is double-buffered so that one buffer can be filled while the other is delivering data to the SLM. Therefore, for each SLM 16, the 10 DMDRAMs comprise two buffers having five DMDRAMs each. Each DMDRAM has 24 input pins and 27 output pins. Each DMDRAM has sufficient capacity for providing data for 432 pixels per row and 1152 rows. Each output pin delivers data to a 16-bit shift register at the input of its SLM 16. Thus, a 27 bit output pin is capable of delivering 27 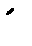 16 = 432 bits, one bit per column of its SLM 16. As indicated in FIGURE 5, for a display size of 2048 pixels per row, not all of the output pins are used.

To provide the pixel data to bit-plane buffer 15, PQU 14 is configured to process five channels of RGB data in parallel. The channels split the data across each row, such that each channel consists of 25 or 26 columns of RGB data. Each of five PQU ASICs processes one channel, and delivers its RGB data to the appropriate red, green, or blue DMDRAM.

In addition to, or as an alternative to, dividing data into columns, the channels could process different rows in parallel. For example, three PQU ASICs could each process a different line of pixel data. The DMDRAMs of bit-plane buffer 15 would be grouped to receive different rows in parallel. Thus, a first DMDRAM might receive row r, a second DMDRAM would receive row r+1, a third would receive row r+3. This process is further described in European Patent Application No. 96120656.2.

Although the present invention has been described in detail, it should be understood that various changes, substitutions, and alterations can be made hereto without departing from the spirit and scope of the invention.

## Claims

1. A display system for displaying images based on an input signal carrying compressed image data, comprising:
a signal interface for receiving said input signal and for providing a compressed bitstream of pixel data;
a multiprocessor unit for receiving said pixel data from said signal interface, said multiprocessor unit having a master processor and multiple digital signal processors capable of operating in parallel, said multiprocessor unit being programmed to perform decompression of said pixel data, thereby providing decompressed pixel data;
a scaling processor for receiving said decompressed pixel data from said multiprocessor unit, said scaling processor being programmed to scale said decompressed pixel data to a desired display resolution, thereby providing processed pixel data;
a picture quality unit for receiving said processed pixel data from said scaling processor, said picture quality unit having circuitry arranged to reverse any de-gamma correction on said processed pixel data, thereby providing display-ready pixel data;
a bit-plane buffer for receiving said display-ready pixel data, said bit-plane having formatting circuitry for formatting said display-ready pixel data into bit-plane format, and having memory cells for storing said display-ready pixel data; and
at least one spatial light modulator (SLM) for generating images based on said display-ready pixel data in said bit-plane format.

2. The display system of Claim 1, wherein said multiprocessor unit is programmed to execute different algorithms depending on the type of said input signal.

3. The display system of Claim 1 or Claim 2, wherein said multiprocessor unit allocates decompression tasks among said digital signal processors.

4. The display system of any preceding claim, wherein said multiprocessor unit is programmed to perform progressive scan conversion if said input signal is interlaced.

5. The display system of any preceding claim, wherein said input signal carries graphics data and said multiprocessor unit is programmed to render graphics images from said graphics data.

6. The display system of Claim 5, wherein said multiprocessor unit is programmed to render alternating portions of one or more of the graphics image in alternating frame periods.

7. The display system of any preceding claim, wherein said multiprocessor unit is programmed to receive user input data and to prepare said user input data for upstream transmission.

8. The display system of any preceding claim, wherein said scaling processor is a serial video processor (SVP) having an input register, a number of processing elements, and an output register.

9. The display system of any preceding claim, wherein said picture quality unit operates on multiple channels of said pixel data.

10. The display system of Claim 9, wherein each of said channels contains a portion of each row of said pixel data.

11. The display system of Claim 9 or Claim 10, wherein said bit-plane buffer is organized to receive said channels in parallel.

12. The display system of any preceding claim, wherein the or each spatial light modulator is capable of generating different coloured images.

13. The display system of Claim 12, wherein said at least one SLM is a single SLM that generates said differently colored images sequentially and wherein said display system further comprises a color wheel.

14. The display system of Claim 12, wherein said at least one SLM is two or more SLMs that generate differently colored images concurrently.

15. The display system of any preceding claim, wherein said bit-plane buffer formats said display-ready pixel data on input.

16. The display system of any of Claims 1 to 14, wherein said bit-plane buffer formats said display-ready pixel data on output.

17. The display system of any preceding claim further comprising:
a timing unit for delivering timing signals to said multiprocessor unit, said scaling processor, said bit-plane buffer, and said at least one SLM.

18. The display system of any preceding claim, wherein the picture quality unit is further arranged to convert the colorspace of said processed pixel data if said processed pixel data is not RGB data.

19. The display system of any preceding claim, wherein the display system is an all-digital display system.

20. A method for displaying images comprising:
receiving an input signal carrying compressed image data to provide a compressed bitstream of pixel data;
performing a decompression of said compressed bitstream of pixel data to provide decompressed pixel data;
scaling the decompressed pixel data to provide processed pixel data of a predetermined display resolution;
reversing de-gamma correction of said processed pixel data, to provide display-ready pixel data;
formatting said display-ready pixel data into a bit-plane format; and
generating images based upon said formatted display-ready pixel data.

21. The method of Claim 20 further comprising the step of:
converting the colorspace of said processed pixel data if said processed data is not RGB data.
